# EUROPÄISCHE PATENTSCHRIFT

(11) **EP 3 147 386 B1**
(45) Veröffentlichungstag und Bekanntmachung des Hinweises auf die Patenterteilung: **08.11.2017**
(21) Anmeldenummer: 15186725.6
(22) Anmeldetag: 24.09.2015
(51) Int. Cl.: C25B 11/04, C02F 1/461

(54) **DIAMANTELEKTRODE**
DIAMOND ELECTRODE
ÉLECTRODE EN DIAMANT

(43) Veröffentlichungstag der Anmeldung: 29.03.2017
(73) Patentinhaber: Schunk Kohlenstofftechnik GmbH, 35452 Heuchelheim (DE)
(72) Erfinder: DR. SCHNEWEIS, Stefan, 61279 Grävenwiesbach (DE); WELLER, Steffen, 35614 Asslar (DE)
(74) Vertreter: advotec.

(56) Entgegenhaltungen:
- EP-A1- 1 036 861
- EP-A1- 1 640 479
- EP-A1- 2 145 985
- US-A- 5 900 127
- US-A1- 2009 324 810

## Beschreibung

Die Erfindung betrifft eine Elektrode für einen Elektrolyseprozess, bestehend aus einem nicht-metallischen Elektrodensubstrat, einer auf dem Elektrodensubstrat aufgewachsenen Aufbauschicht mit in Richtung des Schichtwachstums veränderlicher chemischer Zusammensetzung und einer auf der Aufbauschicht aufgewachsenen Beschichtung mit kristallinem Diamant.

Des Weiteren betrifft die Erfindung Verfahren zur Herstellung der erfindungsgemäßen Elektrode für einen Elektrolyseprozess.

Aus dem Anwendungsgebiet der Elektrolyseprozesse sind Elektroden bekannt, bei denen ein Grundkörper mit einer Beschichtung aus polykristallinem, elektrisch leitfähigem Diamant versehen ist. Als Werkstoffe für den Grundkörper werden verbreitet Metalle und Legierungen, Halbleiter, Keramiken sowie Kohlenstoff bzw. Graphit eingesetzt. Aus der WO 2004/106241 A1 und der EP 0 994 074 A2 sind Diamantelektroden für die Elektrolyse bekannt, bei denen als Grundkörper ein Elektrodensubstrat aus der Gruppe der vorgenannten Werkstoffe eingesetzt wird.

Bei der unmittelbaren Beschichtung des Elektrodensubstrats mit der kristallinen Diamantschicht können sich in nachteiliger Weise Fehlstellen in der Beschichtung ergeben, die zu hohen lokalen Strömen und einer daraus resultierenden thermischen Wechsellast der Elektrode führen können. Bei sehr unterschiedlichen Temperaturausdehnungskoeffizienten von Elektrodensubstrat und Diamant kann es zur Ausbildung von Mikrorissen in der Substratoberfläche kommen, die das Substrat besonders exponiert den bei der Elektrolyse ablaufenden elektrochemischen Prozessen aussetzen. Die Folge hiervon ist eine verstärkte Ausbildung von Fehlstellen in der Beschichtung, die bis hin zur vollständigen Zerstörung der Elektrode führen können, sodass auf Grund einer entsprechend reduzierten Lebensdauer ein häufiger Austausch der Diamantelektroden notwendig wird.

In der EP 2 145 985 A1 ist daher eine Elektrode mit erhöhter Lebensdauer vorgeschlagen worden, die ein Elektrodensubstrat aufweist, das aus einem Grundkörper aus Kohlenstoffmaterial und einer die Beschichtung tragenden Aufbauschicht aus einem nicht metallischen, elektrisch leitfähigen Werkstoff besteht. Die Aufbauschicht weist an ihrer zu beschichtenden Oberfläche eine geringe Rautiefe auf, sodass die Ausbildung von Fehlstellen im Kontaktbereich zu der kristallinen Diamantschicht weitgehend vermieden werden kann. Erstrebenswert ist allerdings im Hinblick auf die Herstellung zuverlässiger Elektroden eine weitere Steigerung der Beschichtungsfähigkeit, also eine Stärkung der Adhäsionskräfte für die Beschichtung an der Oberfläche der Aufbauschicht mit einer kristallinen Diamantschicht.

Aus der US 5 900 127 A ist eine Elektrode zur Elektrolyse bekannt, die ein besonders widerstandsfähiges Substratmaterial aufweist, auf das mittels CVD- oder PVD-Verfahren eine Beschichtung aufgebracht ist, die aus einem Composit aus Diamant und einem elektrisch leitfähigen Material besteht. Die Elektrode kann eine Zwischenschicht aufweisen, um die leitfähige Diamantschicht stärker an das Substrat zu binden.

Die EP 1 036 861 A1 zeigt eine Diamant-beschichtete Elektrode und ein Verfahren zu deren Herstellung, wobei die Elektrode eine porenfreie Diamantschicht aufweist.

Aus der US 2009/324810 A1 ist ein Verfahren zur Herstellung einer Diamantelektrode mittels CVD-Prozess bekannt.

Die EP 1 640 479 A1 zeigt eine elektrisch leitfähige Diamantelektrode, die aus einem kohlenstoffhaltigen Substrat besteht, auf das eine leitfähige Diamantschicht mittels CVD- oder PVD-Prozess aufgebracht ist.

Der vorliegenden Erfindung liegt somit die Aufgabe zu Grunde, eine Elektrode zur Elektrolyse derart weiterzuentwickeln, dass eine zuverlässige und dauerhafte Beschichtung mit kristallinem Diamant gewährleistet ist.

Die Aufgabe wird dadurch gelöst, dass die Aufbauschicht an der Grenzfläche zu der Beschichtung mit kristallinem Diamant Silizium-Auswachsungen in Form von Silizium-Partikeln (Si-Partikel) aufweist.

Die Si-Partikel bilden eine Verzahnung mit der kristallinen Diamantschicht, sodass ein Abplatzen der als Diamantschicht ausgeführten funktionalen Oberfläche verhindert werden kann. Damit ist eine zuverlässige und dauerhafte Diamantbeschichtung mit großer Haftfähigkeit gewährleistet

Erfindungsgemäß besitzen die Si-Partikel eine durchschnittliche Größe von 100 nm bis 2.000 nm. Die perlenartigen Si-Partikel ermöglichen bei einem Durchmesser in dieser Größenordnung eine optimale Verzahnung mit der Diamantschicht.

Erfindungsgemäß beträgt die räumliche Verteilungsdichte der Si-Partikel zwischen 50.000 Partikel/mm² und 500.000 Partikel/mm². Bei einer Dichte in diesem Bereich kann je nach angestrebter Partikelgröße - viele kleine Si-Partikel vs. wenige große Si-Partikel - ein optimaler Kompromiss für die jeweilige Anwendung gefunden werden.

In weiterer Ausgestaltung weist die Aufbauschicht an der Grenzfläche zu dem Elektrodensubstrat eine Schicht aus Siliziumcarbid in stöchiometrischer Zusammensetzung auf.

Um eine stabile und dauerhafte chemische Anbindung der kristallinen Diamantschicht zu gewährleisten, erweist es sich als zweckmäßig, wenn die zwischen der Diamantschicht und dem Substrat liegende Aufbauschicht eine unmittelbar auf der Oberfläche des Elektrodensubstrats aufgebrachte Schicht aus Siliziumcarbid (SiC) in stöchiometrischer Zusammensetzung aufweist.

Weiterhin weist die Aufbauschicht an der Grenzfläche zu der Beschichtung mit kristallinem Diamant eine Schicht aus Siliziumcarbid in unstöchiometrischer Zusammensetzung auf.

Eine weitere, auf die Schicht aus Siliziumcarbid (SiC) in stöchiometrischer Zusammensetzung aufgetragene unstöchiometrische, siliziumreiche SiC-Schicht dient als Grundlage für eine Passivierung und bildet eine funktionale Grenzschicht gegenüber von außen wirkenden oxidierenden Medien.

Vorzugsweise bildet die Schicht aus Siliumcarbid in unstöchiometrischer Zusammensetzung an der Grenzfläche zu der Beschichtung mit kristallinem Diamant eine passivierende Schicht aus Siliziumdioxid aus, falls es während des Betriebs der Elektrode aufgrund von Fehlstellen in der Beschichtung mit kristallinem Diamant zu einem Kontakt zwischen der Schicht aus Siliziumcarbid in unstöchiometrischer Zusammensetzung und einem Elektrolyt kommt.

Durch einen beabsichtigten Oxidationsprozess entsteht eine glasartige, dichte und isolierende Lage aus Siliziumdioxid, welche eine Reaktion äußerer oxidierender Medien mit dem darunterliegenden SiC-Schichten unterbindet und auf diese Weise das Bauteil schützt. Es findet somit eine Passivierung der Oberfläche in den Bereichen statt, welche aufgrund von Defekten in der Diamantschicht mit einem oxidierenden Medium in Kontakt kommen.

Vorzugsweise erfolgen das Aufwachsen der Aufbauschicht und das Aufwachsen der Beschichtung aus kristallinem Diamant mittels chemischer Gasphasenabscheidung, wobei während des Aufwachsens der Aufbauschicht eine Substrattemperatur von 550 Grad Celsius bis 1.500 Grad Celsius eingehalten wird.

Als Verfahren zur Beschichtung der Substratoberfläche wird vorzugsweise die chemische Gasphasenabscheidung (CVD - Chemical Vapour Deposition) angewendet. Bei diesem Beschichtungsverfahren wird in dem Innenraum eines Reaktorgehäuses auf Grund chemischer Reaktionen der zugeführten Reaktionsgase ein Feststoff aus der Gasphase an der erhitzten Oberfläche des Substrates abgeschieden. Die Homogenität und Wachstumsrate der abgeschiedenen Schichten sind durch Prozessparameter wie beispielsweise Gaskonzentration, Zusammensetzung der Gasphase als Mischung unterschiedlicher Reaktionsgase, Gasdruck oder Substrattemperatur beeinflussbar. Infolge des nicht-metallischen Elektrodensubstrats kann die Abscheidung der SiC-Aufbauschicht typischerweise bei einer Substrattemperatur von 550 Grad Celsius bis 1.500 Grad Celsius erfolgen, sodass sich eine hohe Wachstumsrate einstellt. Die Temperatur an der Oberfläche des Substrats während des Diamantwachstums beträgt ebenfalls über 550 Grad Celsius.

In vorteilhafter Weise wird eine Ausbildung der Silizium-Auswachsungen in Form von Si-Partikeln durch eine Änderung von Prozessparametern während der chemischen Gasphasenabscheidung herbeigeführt.

Die Generierung von Si-Partikeln kann durch entsprechende Prozessführung, d. h. durch eine in-situ Änderung der Prozessparameter wie beispielsweise eine Änderung der Anteile der unterschiedlichen Reaktionsgase, der Temperatur oder des Drucks erfolgen. Hierdurch wird das eigentliche SiC-Wachstum zum Ende des Beschichtungsprozesses unterbrochen und die Bildung der Si-Partikel auf der Oberfläche eingeleitet. Weiterhin sind eine angestrebte Größe und eine angestrebte räumliche Verteilungsdichte der Silizium-Partikel durch eine Änderung der Prozessparameter der chemischen Gasphasenabscheidung gezielt einstellbar.

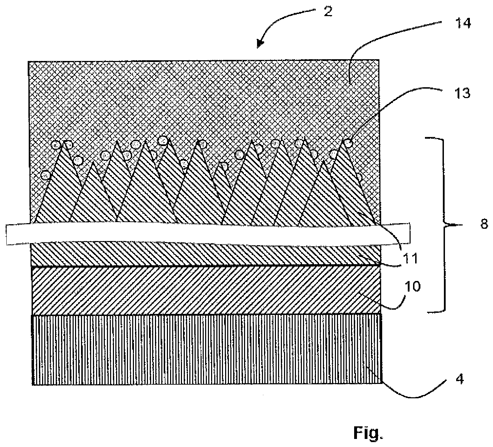

Weitere vorteilhafte Ausgestaltungsmerkmale ergeben sich aus der nachfolgenden Beschreibung und der Zeichnung, die eine bevorzugte Ausführungsform der Erfindung an Hand eines Beispiels erläutert.

Die Figur zeigt in einer schematischen Darstellung eine erfindungsgemäße Elektrode 2 für einen Elektrolyseprozess. Die Elektrode 2 besteht aus einem nicht-metallischem Elektrodensubstrat 4, auf dessen Oberfläche eine Aufbauschicht 8 mit mehrlagigem Aufbau aufgebracht ist. Die Aufbauschicht 8 umfasst eine unmittelbar an die Substratoberfläche angrenzende Schicht aus Siliziumcarbid in stöchiometrischer Zusammensetzung 10. Auf diese Schicht aus Siliziumcarbid in stöchiometrischer Zusammensetzung 10 ist eine Schicht aus Siliziumcarbid in unstöchiometrischer Zusammensetzung 11 abgeschieden. Der obere Teil der Zeichnung zeigt die Elektrode 2 in vergrößerter Darstellung, wobei die Rauigkeit der Schicht aus Siliziumcarbid in unstöchiometrischer Zusammensetzung 11 besser zum Ausdruck kommt.

An der Grenzfläche zu der Beschichtung mit dem kristallinen Diamant 14 befinden sich - hier nicht maßstabsgerecht dargestellt - Silizium-Partikel 13, die eine Verzahnung und damit eine aufgabengemäß zuverlässige und dauerhafte Beschichtung mit dem kristallinen Diamant 14 bewirken.

## Patentansprüche

1. Elektrode (2) für einen Elektrolyseprozess, bestehend aus einem nicht-metallischem Elektrodensubstrat (4), einer auf dem Elektrodensubstrat (4) aufgewachsenen Aufbauschicht (8) mit in Richtung des Schichtwachstums veränderlicher chemischer Zusammensetzung und einer auf der Aufbauschicht (8) aufgewachsenen Beschichtung mit kristallinem Diamant (14),
**dadurch gekennzeichnet,**
**dass** die Aufbauschicht an der Grenzfläche zu der Beschichtung mit kristallinem Diamant (14) Silizium-Auswachsungen in Form von Silizium-Partikeln (13) aufweist, wobei die Silizium-Partikel (13) eine durchschnittliche Größe von 100 nm bis 2.000 nm aufweisen, und die räumliche Verteilungsdichte der Silizium-Partikel (13) zwischen 50.000 Partikel/mm² und 500.000 Partikel/mm² beträgt.

2. Elektrode nach Anspruch 1,
**dadurch gekennzeichnet,**
**dass** die Aufbauschicht an der Grenzfläche zu dem Elektrodensubstrat (4) eine Schicht aus Siliziumcarbid in stöchiometrischer Zusammensetzung (10) aufweist.

3. Elektrode nach Anspruch 1,
**dadurch gekennzeichnet,**
**dass** die Aufbauschicht an der Grenzfläche zu der Beschichtung mit kristallinem Diamant (14) eine Schicht aus Siliziumcarbid in unstöchiometrischer Zusammensetzung (11) aufweist.

4. Verfahren zur Herstellung einer in den Ansprüchen 1 bis 3 beschriebenen Elektrode für einen Elektrolyseprozess,
**dadurch gekennzeichnet,**
**dass** das Aufwachsen der Aufbauschicht (8) und das Aufwachsen der Beschichtung aus kristallinem Diamant (14) mittels chemischer Gasphasenabscheidung erfolgt, wobei während des Aufwachsens der Aufbauschicht (8) eine Substrattemperatur von 550 Grad Celsius bis 1.500 Grad Celsius eingehalten wird.

## Claims

1. An electrode (2) for an electrolytic process, consisting of a non-metallic electrode substrate (4), a build-up layer (8) grown on the electrode substrate (4) and having a changing chemical composition in the direction of the layer growth, and a coating grown on the build-up layer (8) and having crystalline diamond (14),
**characterized in that**
the build-up layer comprises silicon growths in the form of silicon particles (13) at the border surface to the coating having crystalline diamond (14), said silicon particles (13) having an average size of 100 nm to 2,000 nm, and the silicon particles' (13) spatial distribution density being between 50,000 particles/mm² and 500,000 particles/mm².

2. The electrode according to claim 1,
**characterized in that**
the build-up layer comprises a layer made of silicon carbide in a stoichiometric composition (10) at the border surface to the electrode substrate (4).

3. The electrode according to claim 1,
**characterized in that**
the build-up layer comprises a layer made of silicon carbide in an unstoichiometric composition (11) at the border surface to the coating having crystalline diamond (14).

4. A process for producing an electrode for an electrolytic process as described in claims 1 to 3,
**characterized in that**
the build-up layer (8) and the coating made of crystalline diamond (14) are grown by means of chemical vapor deposition, a substrate temperature of 550 degrees Celsius to 1,500 degrees Celsius being maintained while growing the build-up layer (8).

## Revendications

1. Électrode (2) pour un processus d'électrolyse, constitué par un substrat (4) d'électrode non-métallique, une couche (8) de structure développée sur le substrat (4) d'électrode et ayant une composition chimique changeable en direction du développement de couche et un revêtement développé sur la couche (8) de structure et ayant des diamants (14) cristallins,
**caractérisé en ce que**
la couche de structure comprend des développements de silicium en forme de particules (13) de silicium à la surface de bord vers le revêtement ayant des diamants (14) cristallins, lesdites particules (13) de silicium ayant une taille moyenne de 100 nm à 2.000 nm, et la densité de distribution spatiale des particules (13) de silicium étant entre 50.000 particules/mm² et 500.000 particules/mm².

2. Électrode selon la revendication 1,
**caractérisé en ce que**
la couche de structure comprend une couche en carbure de silicium dans une composition (10) stoechiométrique à la surface de bord vers le substrat (4) d'électrode.

3. Électrode selon la revendication 1,
**caractérisé en ce que**
la couche de structure comprend une couche en carbure de silicium dans une composition (11) instoechiométrique à la surface de bord vers le revêtement ayant des diamants (14) cristallins.

4. Procédé pour produire un électrode pour un processus d'électrolyse décrit dans les revendications 1 à 3,
**caractérisé en ce que**
la couche (8) de structure et le revêtement ayant des diamants (14) cristallins sont développés au moyen du dépôt chimique en phase vapeur, une température de substrat de 550 degrés Celsius à 1.500 degrés Celsius étant maintenue pendant le développement de la couche (8) de structure.
